# EUROPEAN PATENT APPLICATION

(11) **EP 2 556 750 A1**
(43) Date of publication of application: **13.02.2013**
(21) Application number: 11425220.8
(22) Date of filing: 11.08.2011
(51) Int. Cl.: A21D 15/02, A21D 13/00

(54) **Fast ready to bake deep-frozen micro-size cornetto**

(71) Applicant: Master Sfoglia di Vassallo Pietro, 90151 Palermo (IT)
(72) Inventor: Vassallo, Pietro, 90151 Palermo (IT)

(57) **Abstract**

FAST READY TO BAKE DEEP-FROZEN MICRO-SIZE CORNETTO. TROUGH A NEW WORKMANSHIP PROCESS AND A NEW DOUGH FORMULA, YOU CAN HAVE A DEEP FROZEN PRODUCT READY TO USE WHICH IS A SIXTH OF THE STANDARD PRODUCT SIZE AND THAT REQUIRES NO LEAVENING.

## Description

COMPARED TO THE SAME PRODUCT AT THE PRESENT TIME, THIS PRODUCT REQUIRES NO STAND, NO PRE-DOUGH, NO LEAVENING, NO COLOURING, WITHOUT SUGAR AND ANIMAL FAT AND CONTAINS NO EGGS OR PARTS OF THEM. ITS DIMENSIONS ARE 13 CM IN LENGHT, BY 10 CM WIDE, BY 0.7 CM IN HEIGHT. THE HEIGHT OF THE PRODUCT IS REDUCED UP TO A SIXTH COMPARED TO THE SAME PRODUCT AT THE PRESENT TIME.

THE DOUGH FORMULA (PER 25 KG FLOUR) IS:
25 KG "CORDOVADO AZZURRO" FLOUR 00,
1 KG WHOLE DRIED MILK,
0.5 KG SALT,
10 CL ORANGE ESSENCE,
10 CL BUTTER ESSENCE,
10 CL VANILLA ESSENCE,
400 Gr IBIS,
13 L WATER,
20 KG MARGARINE FINNIA PASTRY BRAIMS.

### WORKMANSHIP PROCESS:

1. pour the 13 1 water into the kneader;
2. melt the dried milk with the water versed before;
3. add into the kneader the salt, the flour, the essences and the Ibis;
4. set in motion the kneader at a low speed and leave it on until you got a smooth dough;
5. take the dough out of the kneader and divide it in 5.350 gr blocks;
6. put a margarine block above each dough block;
7. fold the block with the margarine inside shaping a bundle;
8. put the block obtained (margarine - dough) into the puff pastry machinery until it get to be 10 mm thick;
9. fold the laminate dough foil and repeat four times the process listed in point 8, continuously, without staggering the four actions with any interval;
10. laminate the foil for the last time at a 4 mm thickness, and wind it round the rolling pin to lay it flat on the table;
11. cut the foil in triangles at the desired size;
12. roll them from the base to the top and bend it down shaping a curve;
13. press the "cornettos" with the laminating machinery till they reach a 0.7 cm thickness;
14. "break down" the temperature at -25°;
15. stock in cold store at -20°. WITH THE ABOVE REPORTED WORKMANSHIP PROCESS AND RIGOROUS FORMULA, YOU CAN OBTAIN A NEW PRODUCT THAT, COMPARED TO THE SAME PRODUCT AT THE PRESENT TIME, GET THE FOLLOWING BENEFITS:
   - PRESERVATION FRESH AFTER BAKING FOR 36 HOURS, CONTRARY TO 5 HOURS STANDARD;
   - REDUCING IN PROCESSING TIMES AND WORK AREA (NO PRE-DOUGH,NO LEAVENING) TILL 50 % LESS COMPARED TO THE PRESENT TIME;
   - SMALL SIZE OF THE DEEP-FROZEN PRODUCT (H CM 0.7) THAT ALLOW A SPACE REDUCTION FOR THE WAREHOUSING (COLD STORAGE) AND PACKAGING. IN A STANDARD PACKAGING (30 cm x 43 cm x 30 cm) MAY BE INCLUDED 390 PIECES, COMPARED TO THE 60 STANDARD PCS.

## Claims

1. Workmanship process in relation to the laminating (points 9 and 10) and final compression (point 13) oriented to reduce processing times (point 9 and 10, without stagger or breaks among the laminating processes) and to reduce the dimensions of the deep-frozen final product (point 13).

2. Long preservation of the fresh product (after baking) for 36 hours.

3. Reduced dimensions in height of the deep-frozen product 0.7 cm compared to the present time.

4. Light formula, low-calorie, being without sugar and animal fat, so suitable for a restricted low-calorie diet (till 1/3 less compared to a standard product).

5. Suitable formula for a low-protein diet, as it contains no eggs.

6. Cooking temperature of the finished product at 220° (compared to the 170° standard temperature).

7. Process times reduced by 50% compared to similar standard production, as it requires no breaks among laminating, no pre-dough and no leavening.
